# EUROPEAN PATENT SPECIFICATION

(11) **EP 1 462 955 B1**
(45) Date of publication and mention of the grant of the patent: **28.04.2010**
(21) Application number: 04004873.8
(22) Date of filing: 02.03.2004
(51) Int. Cl.: G06F 17/30, H04L 29/08, G06F 9/44

(54) **Providing information links via a network**
Bereitstellung von Verweisen auf Informationen über ein Netzwerk
Fourniture de liaisons d'informations par un réseau

(30) Priority: 27.03.2003 US 401620
(43) Date of publication of application: 29.09.2004
(73) Proprietor: MICROSOFT CORPORATION, Redmond, Washington 98052-6399 (US)
(72) Inventor: Evans, Shane C., Duvall WA 98019 (US); Toll, Roderick M., Sammamish WA 98074 (US); Fowles, Ken Delmar, Roslyn WA 98941 (US)
(74) Representative: Grünecker, Kinkeldey, Stockmair & Schwanhäusser Anwaltssozietät

(56) References cited:
- WO-A-01/18636
- US-A1- 2002 054 138

## Description

### TECHNICAL FIELD

The technical field generally relates to communicating over a network and more particularly to communicating over a network to provide links to information.

### BACKGROUND

With the advent of the Internet, communication between entities has become much easier and faster. For example, merchants are now capable of instantaneously reaching out to a targeted group of consumers to provide information related to introduction of new products, upgrades or other offerings.

One popular way of providing information is via email. However, a consumer may not always consider such information useful or helpful, but rather annoying. It is not unusual for consumers to complain about being deluged by unsolicited mass emails (colloquially referred to as "spam") containing unwanted offers. Furthermore, most computer users have heard of horror stories concerning catastrophic loss of data from viruses hiding in unsolicited messages. Thus, consumers are beginning to view unsolicited emails with a critical eye.

Also, merchants have begun to share their customers' personal information (e.g., email addresses), which increases the potential of receiving unsolicited email. Thus, it is not surprising that many computer users carefully guard their email addresses and refuse to provide them to merchants, even when registering software.

In the recent past, there have been several email alternatives for providing information. For example, messages can be sent over a network to a selected group of consumers or users. One example is the PointCast™ Business Network™, which was widely used for providing, over a network, news to individuals who could choose what news to receive from a selected group of sources. However, PointCast™ can still overwhelm users. More recent implementations of multicasting also suffer from the same defects.

Even though users may be unwilling to take the risk of providing an email address to a merchant, there are some cases in which they may actually be interested in Information that a merchant wishes to present. Thus, there is a further need for techniques that better balance the interests of the user and the merchant.

A web-based instruction system for teaching a user to implement an application that uses keyword links is described in US 2002/0054138 A1.

### SUMMARY

The object of the present invention is solved by the subject matter of the independent claims. Embodiments are given in the dependent claims.

As described herein, various methods and Systems are provided for providing information over a network. The examples described herein can provide access to content via links. Such links can be generated and presented in a variety of ways.

In some examples, the links are generated based on link data acquired via the network. The content provider can thus control the links by updating or otherwise controlling the link data.

In some examples, the links are represented as one out of a set of predetermined (or "canned") messages. In this way, the content provider is prevented from specifying arbitrary content, which may not be appropriate under certain circumstances. The messages can be defined as to cover common subjects of communication between content providers and users.

For example, if the links are presented as part of a graphical user interface of an operating System shell, the messages can be limited to the canned messages. A message type can be specified to indicate which message is to be displayed.

The links can be presented so that the content linked to is relevant for the particular Situation. For example, when presenting a representation or summary of an application, links to information about the application can also be presented. The messages can be defined to cover common subject of communication between application publishers and users.

Various authentication and temporal relevancy tests can be performed. And, localization techniques can be used to present messages in the appropriate human language.

Any of the techniques describe herein can be used to provide information about an application. The location of link data from which links are generated can be associated with an application in an application metadata file. The file can be provided when an application is installed or acquired as part of an application watch or wish list.

For example, software consumers may wish to remain up to date on product upgrades or new product introductions. Via the application metadata file, software publishers are able to provide information to a targeted group of consumers (e.g., those having the application metadata file). The users need not provide their email address to the publisher and thus remain anonymous with respect to the publisher.

The technologies described herein can be applied to computer games. In this way, game publishers are provided a way to easily communicate information about their games to gamers, who typically compete within the gaming ecosystem to stay in touch with the latest gaming information.

These and other aspects will become apparent from the following detailed description, which makes references to the accompanying drawings.

### BRIEF DESCRIPTION OF THE DRAWINGS

FIG. 1 is a block diagram of an exemplary networking arrangement by which the technologies described herein can be achieved.
FIG. 2 is a flow chart showing an exemplary method of generating links.
FIG. 3 is a flow chart showing an exemplary method of displaying links.
FIG. 4 is a flow chart showing an exemplary method of generating links in conjunction with an application metadata file.
FIG. 5 is a flow chart of a method by which an application publisher can achieve providing targeted content for an application.
FIG. 6 is a flow chart of a method of communicating information between a provider and a user via links to the provider's content.
FIGS. 7A-C are exemplary messages that serve as links to content available over a network.
FIG. 8 shows a table of exemplary message types.
FIG. 9 is a block diagram of a system for implementing a method of communicating over a network by displaying links on the client computer to information content provided by a server to a user of the client computer.
FIG. 10 is an exemplary link data format.
FIG. 11 is an exemplary application metadata format.
FIG. 12 is a screen shot of an exemplary presentation of links to information for an application in conjunction with a representation of the associated application.
FIG. 13 is a screen shot of an exemplary application activity center welcome page including information pertaining to applications, including information on links to information about the applications.
FIG. 14 is a diagram illustrating exemplary link data.
FIG. 15 is a diagram illustrating a file specifying a format for link data.
FIG. 16 is a flow chart of a method for verifying the authenticity, validity and relevancy of the link related data prior to displaying links to information content on the network.
FIG. 17 is a flow chart of a method for verifying the expiration date and probing of the links prior to displaying links to information content on the network.
FIG. 18 is a flow chart for selecting and accessing information content via links selected to be displayed on the client computer.
FIG. 19 is a screen shot of an implementation of the technologies involving computer games.
FIG. 20 is a screen shot of an implementation of the technologies in a game activity center.
FIG. 21 is a table showing selected set of exemplary messages for computer games to be displayed as links to information content and a message type corresponding to the respective messages.

### DETAILED DESCRIPTION

### Overview of Exemplary System for Achieving the Described Technologies

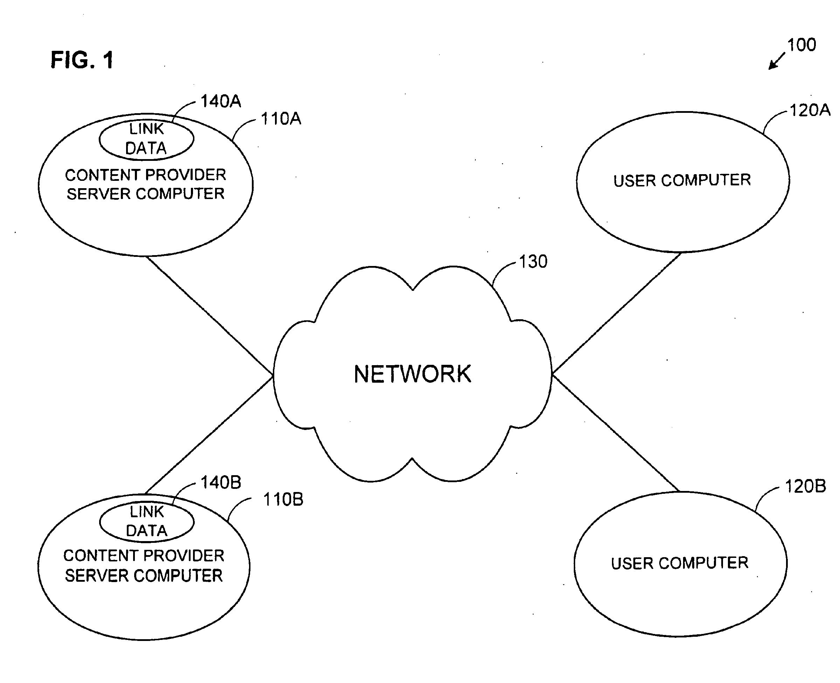

The technologies described herein can be implemented in a variety of computer system arrangements. FIG. 1 shows an exemplary arrangement 100. In the example, the content provider computers 110A and 110B and the user computers 120A and 120B can communicate via the network 130 (e.g., the Internet, an intranet, an extranet, a LAN, a WAN, or some other network arrangement). Although some examples make reference to the Internet, the technologies are equally applicable to communication via other networks.

The example further includes link data 140A available to the content provider server computer 110A and link data 140B available to the content provider server computer 110B. As described in the examples, the link data 140A, 140B can be used to generate and present links at the user computers 120A, 120B by which users at the computer can access content (e.g., at the content provider server computers 110A, 110B or some other computer, such as a web server).

### Exemplary Control Over Data and Presentation of Links

In any of the examples described herein, the computer systems 110A, 110B, 120A, 120B can be implemented as multiple computers. For example, the content provider server computer 110A can be implemented as a scalable system called a "server farm." Further, in any of the examples described herein, the content provider server computers 110A and 110B can be under the control of respective application publishers. Although, in practice, the computers themselves may be owned and operated by an entity other than an application publisher.

Furthermore, in any of the examples, a user at the user computer 120A, 120B can exercise various degrees of control over the links provided. For example, a user can choose whether to display links (e.g., by opt in or opt out options) and how often such links are to be updated.

Because links to content are provided, a computer user can control when such content is provided (e.g., by activating the link) rather than receiving the content without requesting it (e.g., in an email). Such an approach can improve security because unsolicited emails are avoided by the user computers 120A, 120B. Further, the user can control the nature and volume of the content provided.

Thus, the pictured arrangement can be used in a way that addresses concerns of both users (e.g., minimizing intrusive unsolicited content, not providing an email address) and content providers (e.g., updatability). In some of the examples, links based on the link data 140A, 140B are displayed in concert with a representation of an application. The arrangement can thus further address the concerns of application publishers, who can provide information about their applications in a targeted manner (e.g., to those users owning or interested in the applications of the application publisher).

### Overview of Exemplary Method of Generating Links

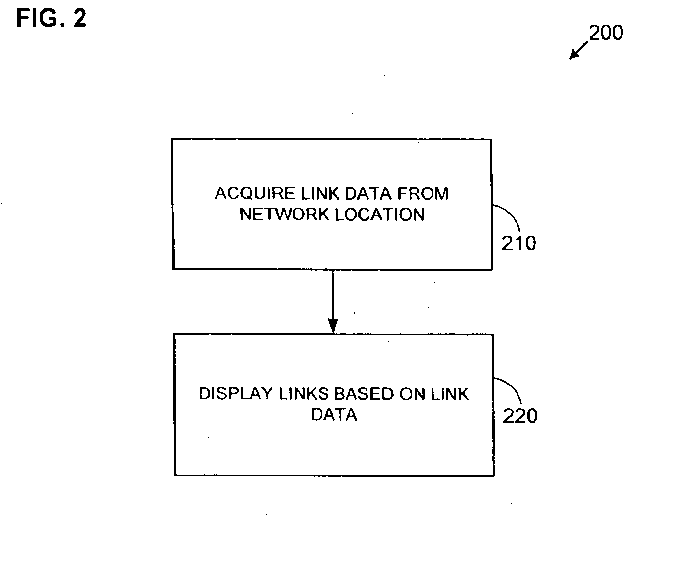

FIG. 2 shows an exemplary method 200 of generating links for display at a local computer. The method 200 can be performed by software at a user computer. In any of the examples described herein, the links can refer to a network location (e.g., "target") at which content is available (e.g., on a web server). When a link is activated by a user (e.g., by clicking on the link), the associated content is provided.

At 210, link data (e.g., 140A, 140B) is acquired (e.g., by the user computer) from a network location. The link data can take many forms. In some of the examples the link data is provided in mark-up language (e.g., XML) and be acquired via a standard web server (e.g., HTTP) request.

At 220, links are displayed (e.g., at the user computer) based on the link data. The links can take the form of any user interface element. In some of the examples, the link is depicted as a text message (e.g., according to the link data). The link target can be determined, for example, by examining the link data.

### Overview of Exemplary Method of Displaying Links

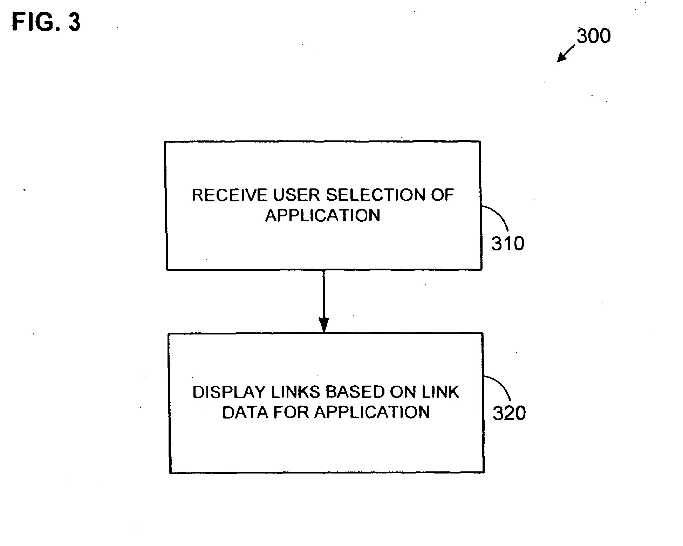

FIG. 3 shows an exemplary method 300 for displaying links (e.g., action 220 of FIG. 2). The method can be performed by software at a user computer.

At 310, a user selection of an application is received. For example, a user may click on representation (e.g., iconic, photographic, or artistic depiction) of the application.

At 320, responsive to the user selection, links based on link data for the application are displayed. For example, one or more links linking to information content related to the application (e.g., under control of the application publisher) can be displayed.

### Methods Performed by Operating System Shell

Any of the examples can be used with benefit in a graphical user interface for an operating system shell. For example, the method 300 of FIG. 3 can be used by an operating system shell user interface when presenting applications. Thus, as a user is interacting with the applications (e.g., executing, updating, or otherwise dealing with the applications), links to data relevant to the applications (e.g., upcoming upgrades and reviews) can be presented.

If desired, the link technologies can be used in an application-centric activity center. In one implementation, the activity center is devoted to computer games and includes specialized functions applicable to games (e.g., retrieving saved games and the like). The links in such an implementation can indicate game-specific messages (e.g., upcoming tournaments and the like).

### Methods Performed in Conjunction with Application Metadata File

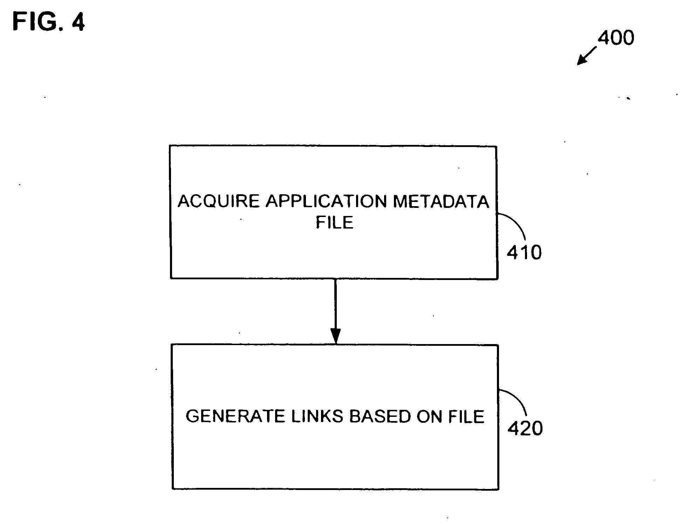

FIG. 4 shows an exemplary method 400 for generating links in conjunction with an application metadata file. The method 400 can be performed by software (e.g., an operating system shell) at a user computer.

At 410, an application metadata file is acquired. The application metadata file indicates various information about a particular application (e.g., application name, application publisher, and a location at which link data for the application is available).

At 420, links are generated (e.g., according to the method 200 of FIG. 2) based on the application metadata file. For example, link data can be retrieved from a location specified in the application metadata file.

The arrangement of the method 400 can be used to advantage in scenarios in which an application-publisher wishes to target information at users owning or interested in a particular application. By including a location at which link data is available for the application in the application metadata file, the application publisher can achieve providing targeted content, even if the user fails to register the application or does not wish to provide contact information (e.g., an email address).

### Methods Performed by an Application Publisher to Achieve Targeted Content

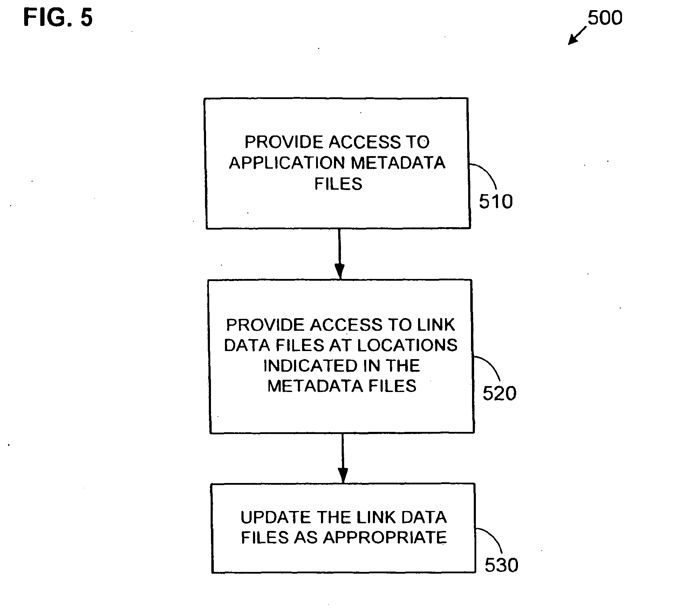

FIG. 5 shows an exemplary method 500 by which an application publisher can achieve targeted content. The method 500 can be performed at one or more computers at the direction of the application publisher.

At 510, an application publisher provides access to one or more application metadata files comprising link data for a particular application. For example, the publisher can provide the application metadata file as part of the software distribution process for the application (e.g., install the application metadata file on a user computer during installation of the application); provide the application metadata file on a website (e.g., which can be accessed by users visiting the publisher's site or linked to by an outside reviewer on a reviewer's website); or provide an update to the application metadata file (e.g., to change the link data location or other information in the application metadata file).

At 520, an application publisher provides access to one or more link data files at locations indicated in the respective application metadata files. For example, the link data files can be provided by a webserver in response to a request to the server (e.g., an HTTP request for the link data file via an URL).

At 530, the application can, if desired, update the link data files as appropriate. Note that the link data files can be easily updated without having to change the application metadata file. Because the link data file can be at a location specified in the application metadata file, the publisher can routinely update the link data file by simply updating a file under control of the publisher.

Although not shown, the publisher can further update the content to which the links link. For example, as new information about the application becomes available, new or updated content can be provided (e.g., via web pages or other network-accessible content).

### Exemplary Combinations of Methods for

### Communicating Information Via Links

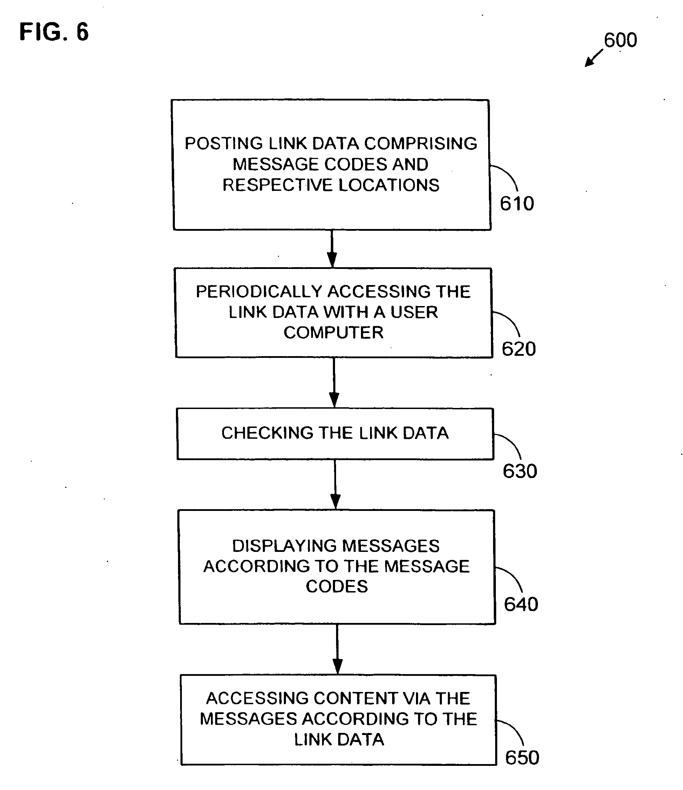

FIG. 6 shows a method 600 of communicating information between a provider and a user via links to the provider's content. Such a method can be performed in concert by software at a user computer and software at one or more computers under control of a content provider.

At 610, a content provider posts link data on a network server (e.g., a web server). The link data comprises message codes and respective network locations for related content. For example, the content provider can store a markup (e.g., XML) file on a web server, which is accessible via a network (e.g., the Internet).

At 620, software at a user computer periodically accesses the link data. For example, the computer may be configured to check every few hours, or every few days as desired. In this way, updates to the link data are eventually propagated to the user computer.

At 630, the link data is checked by the user computer. For example, authentication techniques can be used to verify the source and integrity of the link data. Further, the temporal relevancy of the link data can be checked to see if it is expired or stale. Also, the link data can be checked to see if it is of the proper format. If the link data is not acceptable, the link data can be discarded or ignored (e.g., the method stops or uses last previously known good data). Such checking can avoid providers or imposters from overwhelming the user computer with unwanted content links.

At 640, the user computer displays one or more messages according to the message codes. For example, a text message may be displayed based on the message code. The message can serve as a link to the provider's content when activated.

At 650, responsive to a user activation of one of the messages, the content associated with the respective message is accessed (e.g., displayed or otherwise presented at) by the user computer. The content can be of any form (e.g., text, audio, or video) and is found by accessing the respective location associated with the message code of the displayed message (e.g., in the link data).

The users may not be interested in giving out personal information such as an email address to the application publisher due to the high risk of misuse of such information. Thus, the user may never register the software. Or, the email address provided during registration may be faulty or missing. Method 600 of FIG. 6 can be used in such circumstances so a content provider can communicate with a targeted but, at the same time, anonymous (e.g., with respect to the content provider) group of users. In this manner, the vendor can send messages to a targeted group of users while the user remains anonymous to the vendor. In the example, the user controls presentation of the content by activating a link. Thus, a content provider can target a selected group of potential users to inform them (e.g. by sending a link to content) of the availability of interesting content at a particular network location (e.g. webpage) without impinging upon users who are not interested in the content.

As described above, the methods can be used to communicate information about a particular application to a potential consumer. In such a case, the content provider can be an application publisher. The knowledge of a user's interest in particular content can be premised on many different factors, but one likely factor is a previous or current relationship between the application publisher and the user. For example, if a user had bought computer applications from the application publisher, it is likely that the same user may be interested in an upgrade to the application or other information about the application.

### Exemplary Messages

A variety of link user interface elements can be used in any of the examples. Activation of the link user interface element accesses the associated content. A useful implementation of a link user interface element is a text message.

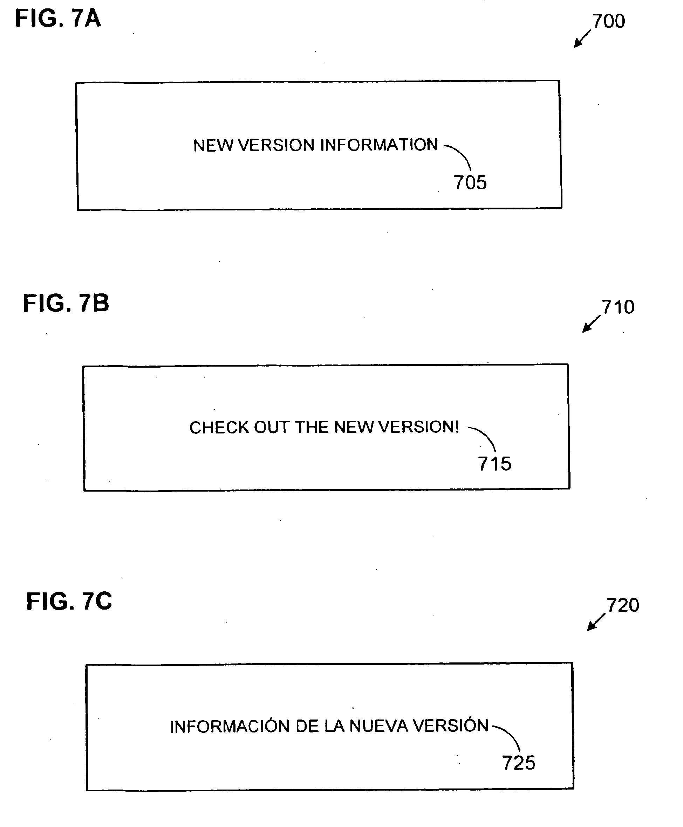

FIG. 7A shows an exemplary presentation 700 of a text message 705. Such a message is useful in that it communicates the type of information that will be accessed when the message 705 is activated (e.g., clicked on).

In any of the examples, the message 705 can be one of a canned (e.g., predetermined) set of messages chosen according to a message type (e.g., a message type code). The presented user interface elements can be limited to the canned messages. Such an approach avoids problems with content providers who could specify arbitrary content that may be inappropriate. For example, if the messages are presented as part of a graphical user interface of an operating system shell, it may not be appropriate for the user interface element to appear as offensive text.

Rather than a bland description of the information, a more familiar phasing 715 can be used as shown in the presentation 710 of FIG. 7B.

Further, another advantage of using canned messages is that presentation of the messages can easily be localized to the human language indicated as local by the user computer. For example, FIG. 7C shows a presentation 720 having a message 725 in Spanish. Any number of other languages can easily be supported.

If desired, the canned messages can be updated (e.g., via an operating system function) or extended.

### Exemplary Message Types

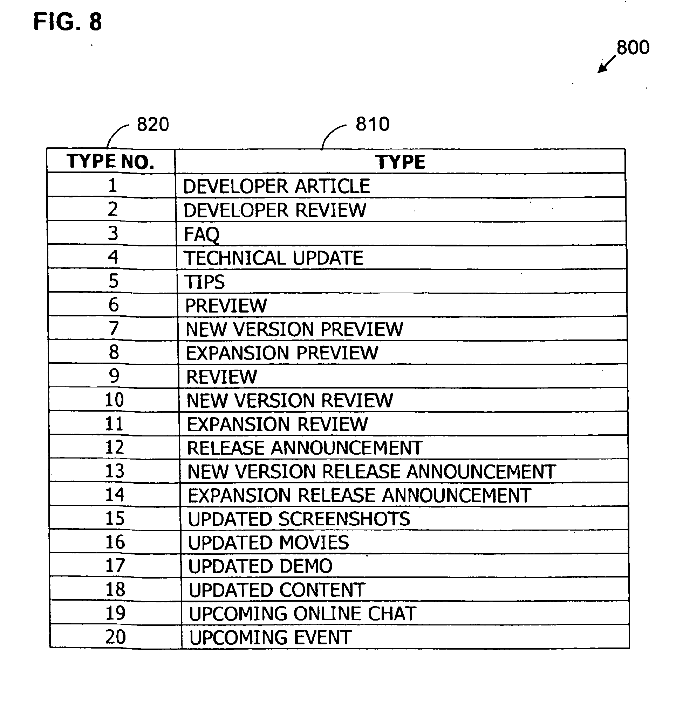

FIG. 8 shows a table 800 of exemplary message types. For each type 810, there is a type number 820. The actual text displayed may vary slightly from that shown in 810 (e.g., as shown in FIG. 7B). Although not shown, the table can also include text for human languages other than English, or a different table can be used for the different language.

### Exemplary System

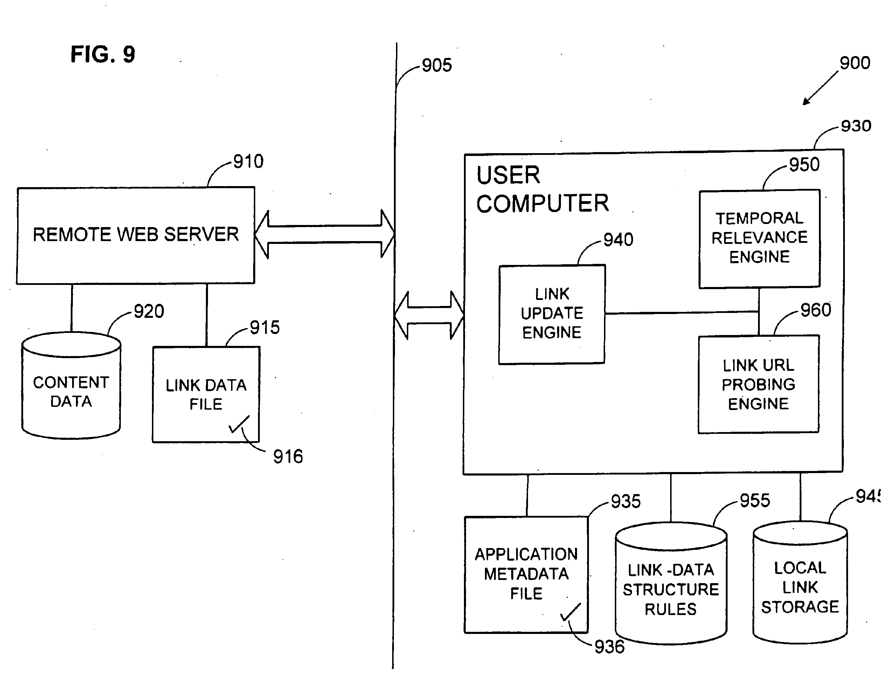

FIG. 9 illustrates an exemplary system 900 that can be used to implement any of the technologies described herein. A web server 910 is controlled by a content provider and includes one or more link data files 915. The link data files contain data for displaying (within a user interface associated with the user's computer 930) links to information content.

In the example, the links are directed to content 920 that the provider believes is of interest to the user. The content 920 is shown as stored within a storage means directly connected to server 910 for the purposes of illustration only. The links can direct the user to web pages hosted on remote servers other than 910 so long they have the appropriate network locations (e.g., Uniform Resource Locators or other similar standards for designating the location of an object within a network) for the web pages external to the provider's server 910. For example, the provider can use the technologies described herein to inform the users of news reports or reviews related to their products that may be hosted on other web sites (e.g. application news sites or application review sites).

In any of the methods described herein (e.g., method 600 of FIG. 6), the user's computer can include an application metadata file 935 (e.g., stored in persistent storage). An application metadata file 935 may contain an URL the link data file 915 on the server 910 and other data. The application metadata file 935 can be provided along with the application and installed on the user's computer 930 when the user installs a particular application or acquired by a user who is interested in the application (e.g., and stored on a watch or "wish" list). Also, changes in the network location of the link data files or location of new link data files to a particular application can be provided along with patches or updates to the existing applications.

After the address to the link data file 915 is determined by consulting the application metadata file 935, the user computer 930 can use a link update engine 940 to periodically access the server 910 for downloading any link data files 915, that may be available. Such periodic downloading of link data files can be automatic, and the duration of time between such downloads can be user specified.

Furthermore, once the link update engine 940 accesses the server 910 and obtains a link data file 915, the user's computer can determine whether link data file is authentic (e.g., posted by a user authorized provider) and determines whether the link data is current (i.e., more recently modified than any link data file related to the same application already downloaded for display by the user or not past a specified expiration date since it was last modified). This can be done prior to downloading the link data file 915 on to the local storage 945.

For the purpose of authentication, the application description file 935 can be provided with a signature 936 that may be authorized through a third party authenticator (e.g. Verisign, Inc. of Mountain View, California), and the link data file 915 can also be provided a similar signature 916 such that the link data file 915 can be authenticated via the two signatures 916 and 936. If the signatures indicate the data is from the same source, then the link data file 915 and the application description file 935 are from the same provider, which avoids unauthorized access or modification; the file 915 is downloaded to the local storage 945.

For the purpose of verifying whether the link data file is current, the user's computer 930 can include a temporal relevance engine 950, which can include three additional data checking techniques. One, depending on a given time parameter, the temporal relevance engine determines whether the link data file is too out of date to be displayed. For example, the user may not want to display links that were posted more than certain amount of time ago (e.g., are stale). In this manner, the user gets to define how current the information he or she is interested in seeing should be. Second, the engine 950 can check whether the link is past a certain expiration date (e.g., specified in the link data). It also encourages providers to post links to the most current and up to date information. Third, it may be the case that some links posted on the server 910 are less recent or as recent as the link data files already downloaded by the user during an earlier access. In such circumstances, the temporal relevance engine 950 will suspend the downloading of such link data files.

Regarding the previously downloaded link data files, the temporal relevance engine 950 can be programmed to prevent the display of any links that are past a certain date. The time parameter for expiration of a link may be set by the user, the provider, by the user's computer 930 as a default, etc. To the extent a particular implementation aims to provide control to a user, the user set date can override other dates.

To provide more control over how and when links to information is displayed on the user's computer display, rules can be used to control the formatting of the data provided in the link data file 915. The link update engine 940 is capable of accessing a set of link data structure rules 955, and to match such rules to the link data file 915 posted on the server 910. For example, such data structure rules may be implemented as a XML (Extensible Markup Language) schema file which can be used to verify a link data file that is XML according to the schema.

Finally, once the temporal relevance, the authenticity, and the data structure format of the link data file is verified and approved, the link data is stored within the storage means 945 (e.g., persistent storage). Later, the links may be displayed for the user to access if he or she chooses (e.g., when displaying a representation of the application associated with the application metadata file 935).

However, prior to displaying the links, it may be safe to verify that the links do lead a user to the content described in the link data file. Thus, a URL probing engine 960 is used to probe the page directed to by the link. Such an engine may verify that the page does not generate any errors (e.g., is present), does not display any offensive and unwanted content and approve the page for display. Such an engine may also probe the URL prior to launching the web page each time after the user selects a link for accessing information.

The system 900 can be used in such a way that the user at the user computer 930 remains anonymous with respect to the content provider controlling the remote web server 910. However, the links provided at the user computer 930 can still target relevant information to the user. In fact, a user who purchases an application would be very likely interested in an upgrade or news in the media relating to such an application. Thus, the game publisher can provide information to a targeted user without the user's losing their anonymity or being deluged by unwanted content.

### Exemplary Link Data Format

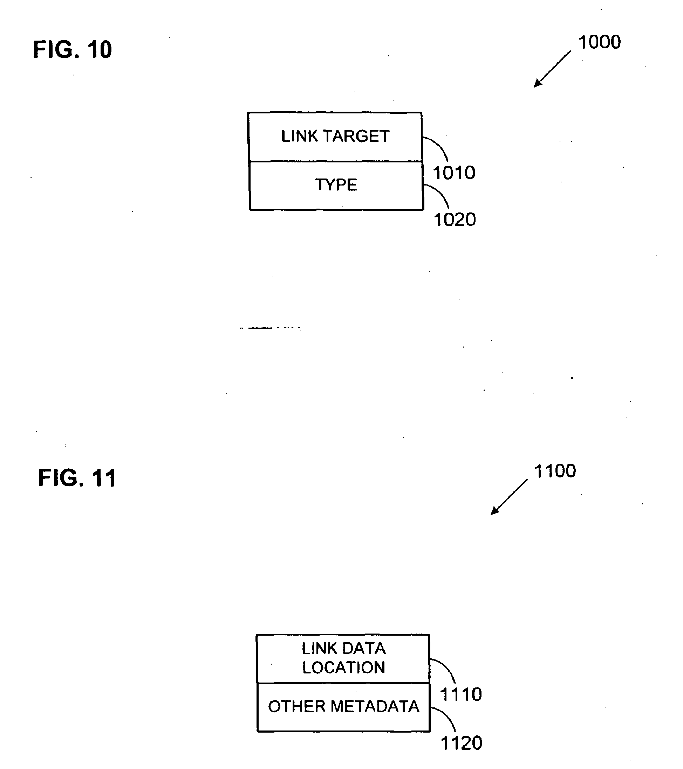

FIG. 10 shows an exemplary link data format 1000 representing information for presenting a link. The data is stored in a data structure. The link data 1000 is stored in a file and includes a type field 1020 and a respective link target field 1010. A link data file may include one or more such entries. Additionally, further information can be included, such as an appropriate temporal relevance data for the links.

The type field 1020 can include any data specifying a type (e.g., an alphanumeric string or a numerical value). For example, a message type code such as that shown in FIG. 8 can be used. The appropriate message to be displayed for the link is thus specified.

Content of the type field 1020 can be chosen by content providers from among a selected set of values to display a canned message. By allowing the content provider to provide the article type number instead of the message itself, the content of the message accompanying the displayed link can be limited to informative, but non-offensive content. In this manner, the message to be displayed avoids misuse by the content providers.

Furthermore, the messages may be localized to the language preference of the user's computer regardless of the language preference of the server posting link data files. Because the link data file provides only a value (e.g., the type number shown in FIG. 8), the message can easily be provided in the local preferred language.

Further, the link data 1000 comprises a respective link target 1010, which can specify a network location indicating content to be presented when the link is activated. For example, and URL (or other similar network location addressing standard) can be used. Thus, when a user selects a displayed link, the associated URL will be used to locate the information related to the link.

Additional fields or files can be supplied to track other relevant data.

### Exemplary Application Metadata Format

FIG. 11 shows exemplary application metadata format 1100. The metadata can be stored in a data structure. Further, such metadata can be stored in an application metadata file (sometimes called an "application data file" or "application description file"). The file can be associated with a particular application via a configuration store (e.g., by associating a unique identifier for an application with the file name). A user computer may have one or more application metadata files stored for one or more respective applications. The metadata file may be present, even if the application is not installed (e.g., if the application is on a watch or "wish" list for the user computer).

In the example, the metadata 1100 includes the link data location 1110, which specifies a location at which link data (e.g., the link data 1000) can be found. In this way, an application publisher can specify a location at which link data is located and can update the link data at will without direct access to the user computer.

The metadata 1100 also can include other metadata 1120 (e.g., publisher name, application name, unique application ID, date modified, date published, etc.).

### Exemplary User Interface with Links Provided For Accessing Content Relating to an Application

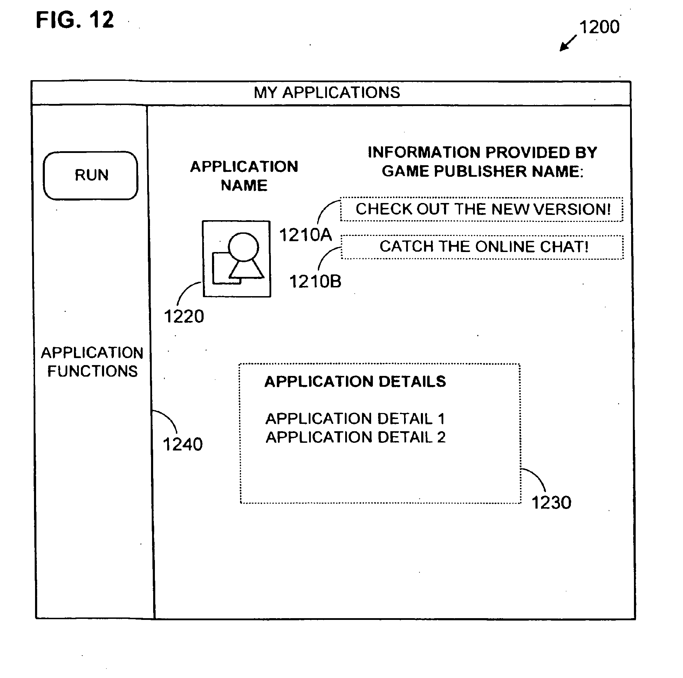

FIG. 12 shows an exemplary screen shot of a graphical user interface 1200 in which links 1210A, 1210B are presented for a particular application called "application name." Such a graphical user interface can be presented responsive to a request for information about an application (e.g., in an operating system shell when presenting a representation of the application). In the example, an iconic, photographic, or artistic representation 1220 is presented, and the links 1210A, 1210B are presented proximate the representation 1220.

Further details 1230 (e.g., application size) regarding the application can also be presented. And, various application functions 1240 (e.g., run, upgrade) can be presented in the user interface 1200.

In the example, the user interface 1200 can serve as a summary page for the particular application. An area or pane of the user interface 1200 can be used to display the links 1210A, 1210B, which can be generated as described in any of the examples herein. In the example, the information is attributed to the game publisher "Publisher Name" (e.g., which can be determined from the application metadata file).

If desired, a user can activate one or more of the links 1210A, 1210B to access content associated with them (e.g., in a link data file).

In practice, different arrangements of the elements shown in the user interface 1200 can be advantageous. Fewer, more, or different elements can be included.

### Exemplary User Interface Indicating Links Relating to an Application

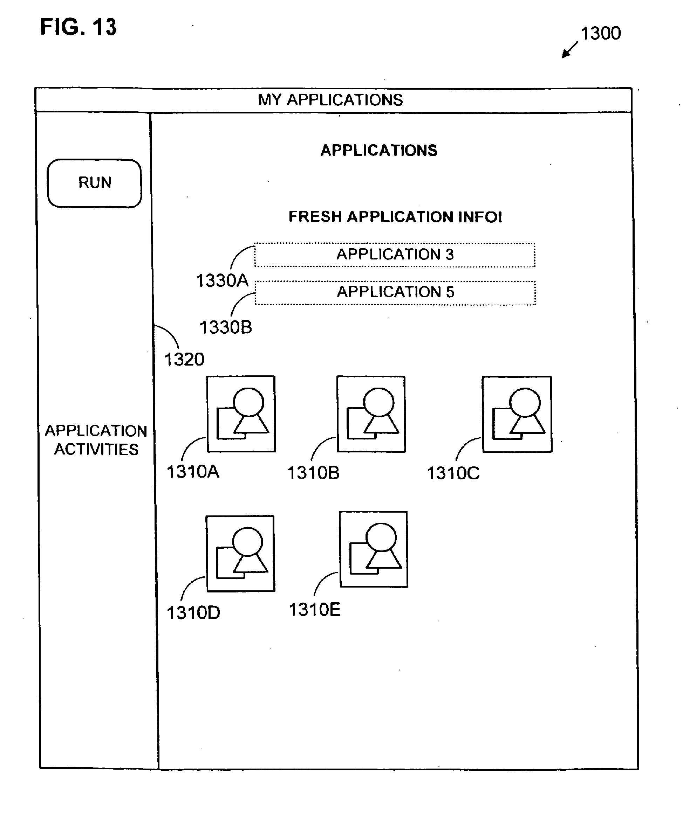

FIG. 13 shows a screen shot of an exemplary user interface 1300. The user interface 1300 can be presented by a user computer as part of a graphical user interface for an operating system shell and can be included as part of an application activity center (e.g., the welcome page of the center).

In the example, the applications available on the computer are shown as icons 1310A-E. Activities for the icons are shown in the pane 1320. When an appropriate (e.g., not stale or expired) link to content for an application is available, appropriate links 1330A-B can be displayed. Activation of the links 1330A-B can navigate to a summary for the application (e.g., as shown in FIG. 12) or directly to the content specified by the link. The links can be generated and processed as described in any of the examples herein, except that in the example, the application name is presented for the link rather than a message.

Alternative arrangements are possible. For example, the links 1210A-B may be displayed directly on the welcome page 1300 without having to navigate to the summary page 1200.

### Exemplary Link Data File

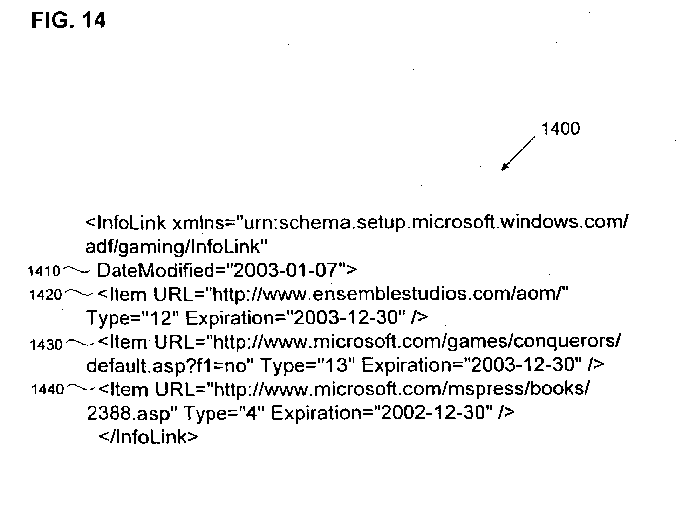

FIG. 14 shows an exemplary link data file 1400 in XML. The file 1400 as shown can be used for the exemplary link data of FIG. 10. At 1410, the date modified field is specified as "2003-01-07" and the file 1400 also comprises data related to three separate links 1420, 1430, 1440. The links comprise an article type which corresponds to a unique message (e.g., chosen from the table of FIG. 8), a respective URL address, and a respective expiration date. The link data file can thus be used to generate links as described in any of the examples herein.

### Exemplary Data Format Rules for Link Data File

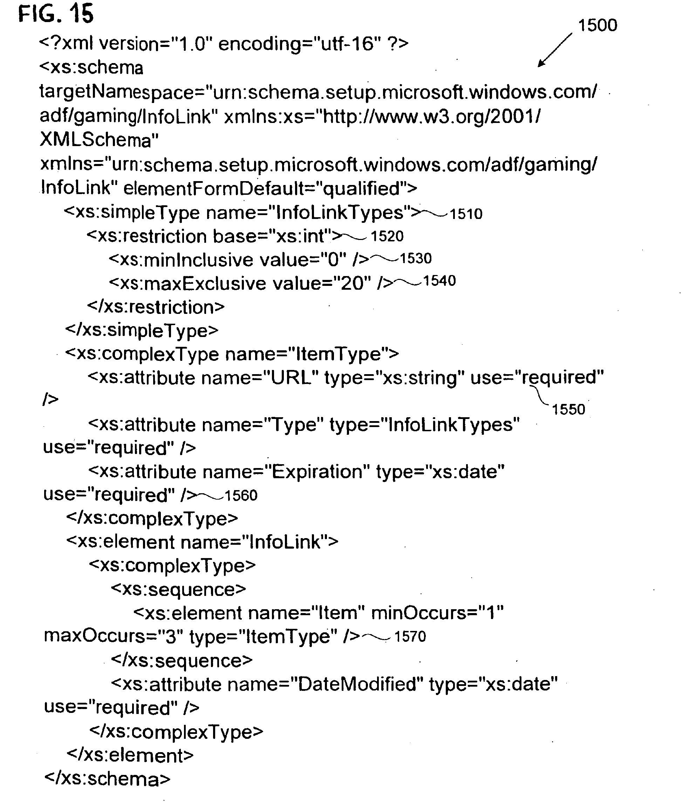

FIG. 15 shows a schema definition (e.g., "links.0.0.0.1.xsd") for link data files (e.g., the XML file shown in FIG. 14). Whenever a new link data file 915 is accessed by the user's computer, the link data file (e.g., the file 915) can be checked to determine that it conforms to the rules of the schema (e.g., by the update engine 940). If the link data file does not conform to the schema, the user's computer (e.g., the computer 930) can refuse to accept the file or to display the link.

For example, at 1510 the schema 1500 begins to describe the rules for "<InfoLinkTypes>" (e.g., corresponding to the type number of FIG. 8). As shown in lines 1520, 1530 and 1540 the data structure rule for InfoLinkType is that it should be an integer between and including numbers 1 and 20. Similarly, beginning at line 1550, the attribute "URL" is described as a string and at 1560, the attribute "Expiration" is defined as a date. Also, at line 1570 the schema notes that each conforming file should have at least one link but not more than three. Comparing this schema 1500 to the XML link data file 1400 will show that the file conforms to the schema. Thus, the link, data file 1400 will be retrieved and used to display links provided that it meets the other criteria (e.g. temporal relevance, signature match, etc.).

A number of other schemas can be used (e.g., having different formats) instead. The schema arrangement helps to confine the content provider so that the user is not overwhelmed with numerous messages. In this way, the interests of the user at the user computer (e.g., to not be deluged with information) are balanced against the interests of the content provider (e.g., to provide relevant information to the user).

### Exemplary Method Including Checking a Link Data File

Once the provider has posted link data files at a network location (e.g., as shown in FIGS. 5 and 6), a user computer (e.g., as shown in FIG. 9) can be used to download and display links displayed as appropriate messages.

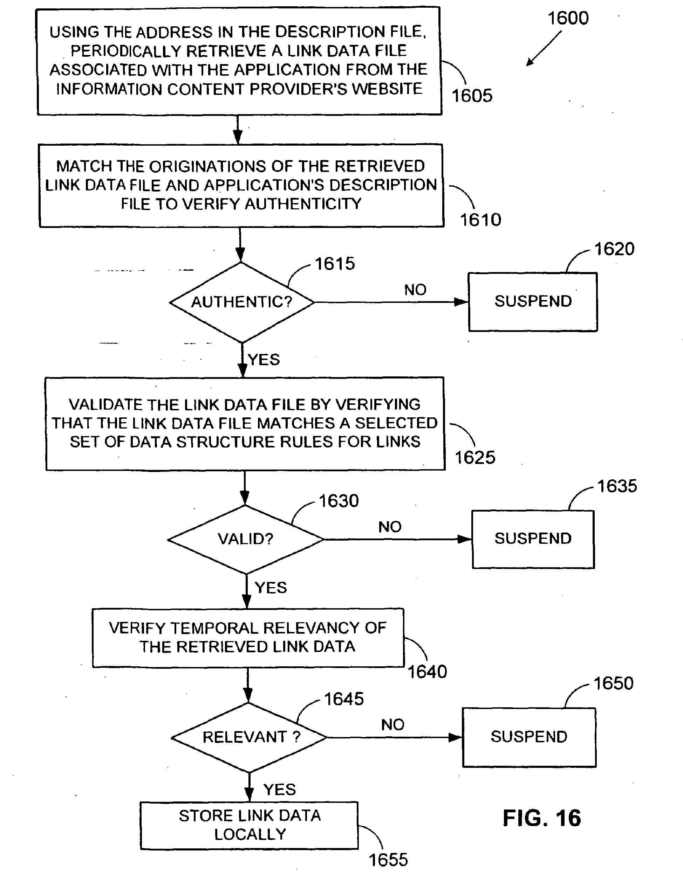

As part of the process, a link data file can be checked for acceptability. A variety of checking can be done. FIG. 16 shows an exemplary method 1600 including checking a link data file.

At 1605, the web page corresponding to an URL specified by a provider (e.g. within an application metadata file as a location for link data) is accessed. Once it is determined that a link data file is available at the web page, at 1610, the link data file is authenticated by matching the originators of the signatures for the application metadata file on the user's computer and link data files on the server specified by the provider, if any. This process guards against the possibility that someone other than an authorized entity may gain access to the network location specified by the application metadata file and post unauthorized link data files.

However, without the signature authority, even if an unauthorized entity were to gain sufficient access to post files at the network location provided by metadata file, the unauthorized entity may not be able to obtain and append a true signature to match the application metadata file. This is so because a private key must be used to generate the signature, and the private key may be password encrypted or otherwise protected. Thus, if the file is found not to be authentic at 1615, then at 1620, processing of the link data file is suspended.

Once the link data file is authenticated, at 1625 the file is validated by verifying that it matches the selected data structure rules (e.g. as shown using the XML schema of FIG. 15). If the file is determined not to be valid at 1630, then at 1635, processing of the file is suspended. Once the link data file is validated, then at 1640 the temporal relevancy of the file is verified. For example, as described above with reference to the temporal relevancy engine, 950 in FIG. 9, the date modified data of the posted file can be compared to the date modified data of a file that corresponds to a link currently approved for display. In this manner, links that are less current than those already approved for display are prevented from supplanting more current and up to date links.

Also, the expiration date can be verified to determine whether the file is still temporally relevant. Such a verification may be implemented by comparing the expiration date (e.g. 1130 of FIG. 11) of the link data file being retrieved to the current date.

The expiration date field can be specified initially when the file is first posted by the provider or by setting a default value (e.g. a week from the date modified value). However, user setting can override the expiration date (e.g., by specifying that a link not be displayed more than 7 days after being received) by specifying a period after which links are deemed to be stale. For example, if the provider knows that a particular link is only viable for a very short period of time and that period is less than the user preferred stale link period then the provider's expiration date would determine the temporal relevancy of the file. For instance, a game application provider may want to post a message of a special sale for a product that lasts for just hours instead of days.

Alternatively, expired link data files can be removed automatically by appropriately programming the server on which they are located. If the file is determined not to be relevant at 1645 (i.e. the date modified is not current enough or it is past the expiration date), then at 1650 processing is suspended.

Furthermore, after authentication 1615, validation 1630 and relevancy determination 1645 is complete then at 1655 the link data file is approved to be stored on a storage means local to the user's computer and can be used for displaying links.

### Exemplary Method Including Probing

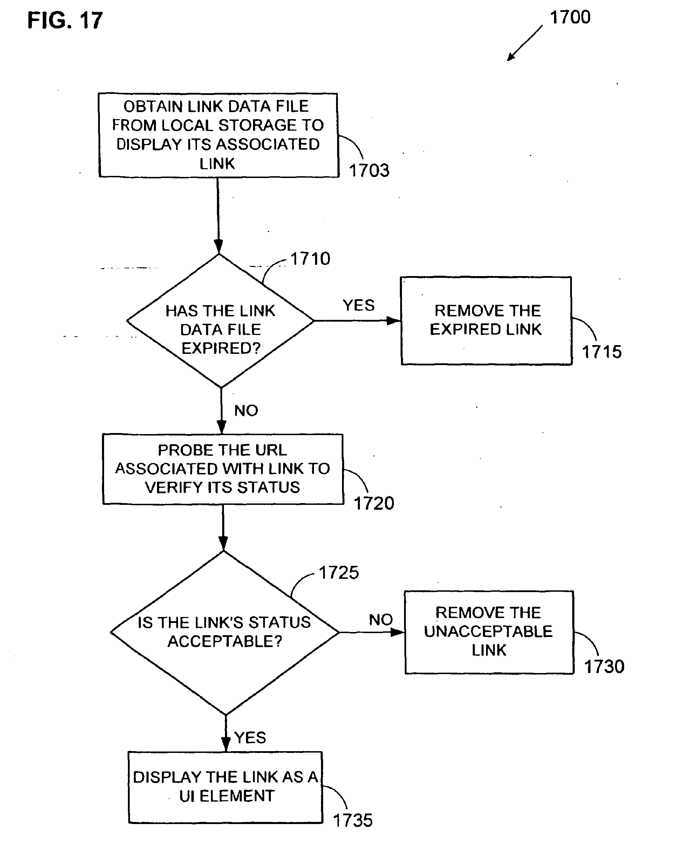

Having stored the link data on the user computer, further processing can be done as shown in the method 1700 of FIG. 17. The method 1700 can be performed responsive to a request to generate links for a particular application (e.g., when displaying a representation of the application).

At 1705, an approved link data file is obtained and at 1710 it is again verified to ensure it is not past its expiration date. This is so because the file may have expired after it was first retrieved originally from its location on the network. If the file has expired then at 1715 the file is removed from local storage which will prevent any links associated with it from being displayed.

If the file is determined to be within its expiration date, then at 1720 the location specified by the URL within the file is probed to verify that it is acceptable for display. For example, the probe process may be able to verify that accessing the location by the URL does not yield an error page (e.g. service unavailable) or to search the site for any objectionable content. In this manner, the user is shielded from needless errors.

If the link is found to be unacceptable after the URL probe, then at 1730, the link data is removed. However, if the link is found to be acceptable then at 1735 the link is displayed for the user to select if he or she chooses to access information.

### Exemplary Method of Displaying Links

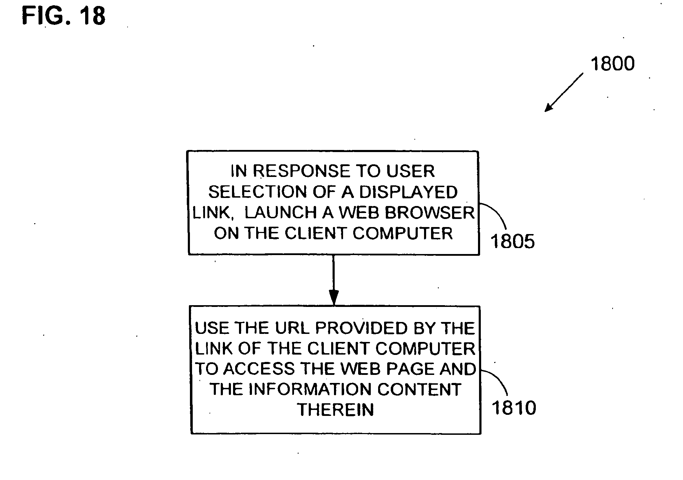

FIG. 18 shows a method 1800 for accessing information content using information links displayed as UI elements affiliated with applications. At 1805, in response to a user's selection of a displayed information link a browser available to the user's computer is launched and at 1810 the URL associated with the link is used to access the specified location to render (e.g., display) information content.

Prior to launching and displaying a web page, the user may be appropriately warned (e.g., via a dialog box) that he or she is about go outside the shell of their operating system to access a web page that may or may not be safe. Such a warning can be configured to stop appearing after a number of warnings.

### Exemplary Combinations of Methods

Figs. 16, 17, and 18 can be combined together into a single method by performing the methods seriatim. Generally, FIG. 16 describes a process for periodically retrieving link data files from a provider specified network location and storing such files in a local location accessible to the user's computer; FIG. 17 describes a process for displaying links using link data files; and FIG. 18 describes a process for using the displayed links to access information content.

### Exemplary Implementations of Data Structures

Instead of or in addition to the various data structures described herein, others can be used. For example, a database table can be stored on the user computer to indicate the last modification data for link data for the application. Such a database table can be stored for each user. When link data is downloaded, the database table can be updated. Table 1 shows an exemplary implementation of such a database table.

**Table 1- Database Table for Tracking Modification Dates**

| **Column** | **Type** |
|---|---|
| ApplD | Uniqueidentifier |
| DateModified | Datetime |

For the links in the link data file, an entry can be stored in a database table or other data structure to indicate link-specific data. Table 2 shows an implementation of such a database table.

**Table 2 - Database Table for Tracking Data for a Link**

| **Column** | **Type** | **Description** |
|---|---|---|
| AppID | uniqueidentifier | Application with which link is associated |
| URL | nvarchar32 | URL to be accessed when link is activated |
| Type | nvarchar32 | Message type to be displayed for link |
| Expiration | datetime | Link's expiration date and time |

### Exemplary Implementation of Functionality

The techniques described herein can be implemented in a variety of ways. The following describes examples of displaying, updating, retrieving, and purging links.

Link display can be achieved by querying an appropriate database table (e.g., a database table for tracking data for a link, such as that shown in Table 2). The query can ask for the latest n links for a particular application (e.g., via the "GetLatest" function, below). Appropriate steps can be taken if no links are returned (e.g., displaying a message to a user that there are no new links or no new information).

Various other functionality is shown in Table 3, and Table 4 shows another exemplary data structure for holding link information.

**Table 3 - Link Functions**

| **Function** | **Description** |
|---|---|
| bool Update(Guid applD) | Update the links in the database table. If successful and new items are found, it returns true. If no new items are found, it returns false. Table 5 shows an exemplary implementation. |
| InfoLink[] GetLatest (Guid applD, int maxReturn) | Retrieves the latest n items from the store for a given application ID. If successful, it returns with an array of up to *maxReturn* InfoLink structures. If no items are found, it will return an empty array |
| Purge(Guid applD) | Purges expired items from the store for a particular application. If Guid is empty, purges for all applications (e.g., for the user's table). |

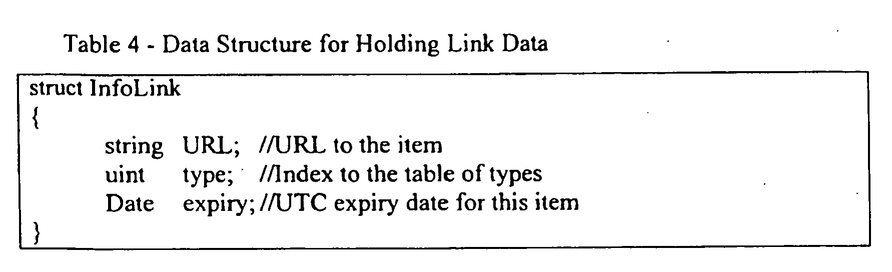

**Table 5 - Exemplary Implementation of Update**

| **Update** |
|---|
| 1. Check the AppID against the list of installed application metadata files. If not present, throw an exception and quit. |
| 2. Check the configuration data store. If links are disabled for the appID, throw an exception. |
| 3. Retrieve the link data location (e.g., URL) from the file system for the appID |
| 4. Access the location to retrieve the link data. If fails or not found, throw an exception |
| 5. Validate and authenticate link data against the metadata file. If either fails, throw an exception and quit after discarding the link data. |
| 6. Parse the link data and examine the data modified element against that stored in the file system for the last link data downloaded for the appID. If the link data is not newer, discard and return an empty array. |
| 7. Examine each link in the blob. If they have not already expired, add to the database. If any times were added, return true, else return false. |

### Exemplary Use of the Described Technologies for Presenting a Game Activity Center

Computer games have become enormously popular among computer users. Moreover, this is a fast moving industry where new games and upgrades are being released every day. Gamers compete with each other to be up to date on news in the gaming industry, but they may still be unwilling to compromise their privacy and computer security by registering their application with a vendor. Thus, the described technologies can be applied with great advantage to the computer gaming community.

Computer game publishers recognize the value of communicating with their users, and now plan their games so they will fit appropriately in the gaming community (sometimes called the "gaming ecosystem.")

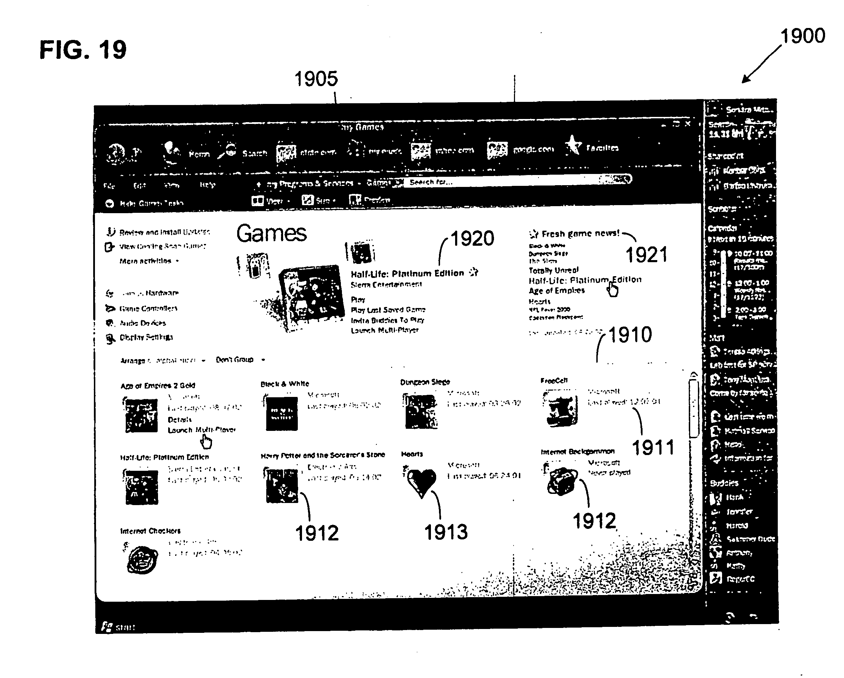

FIG. 19 shows a screen shot of an exemplary user interface 1900 in the form of a welcome page for a game activity center presented by the operating system shell (e.g., of any of the Microsoft^{®} Windows^{®} operating systems of Microsoft Corporation of Redmond, Washington or other desktop operating system shells). The user interface 1900 can provide functionality similar to that of FIG. 13 but be customized for game-related activities.

The welcome page 1900 named at 1905 as "My Games" can be used to display information related to computer games loaded on a user computer. Iconic representations 1911-1914 in the pane 1910 represent the games installed on the computer.

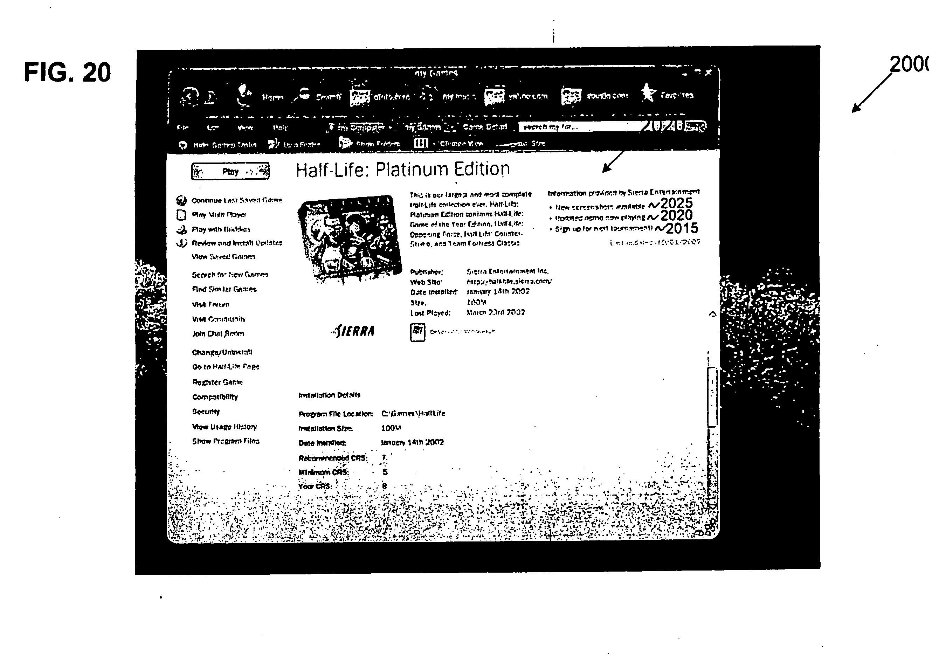

The welcome page can include an area 1920 (e.g., with the header 1921) including an indication of whether new information is available for the games. In the example, the most recently played game 1920 is also listed. Upon selecting a game and requesting details, a more detailed user interface for the game can be displayed, as shown in FIG. 20.

### Exemplary Use of the Described Technologies for Presenting a Detail Page for a Game

FIG. 20 shows a screen shot of an exemplary user interface 2000 in the form of a detail page for a particular game. The user interface includes an area 2010 in which links 2015, 2020, 2025 to information relevant for the displayed game are presented.

### Exemplary Game-Appropriate Messages

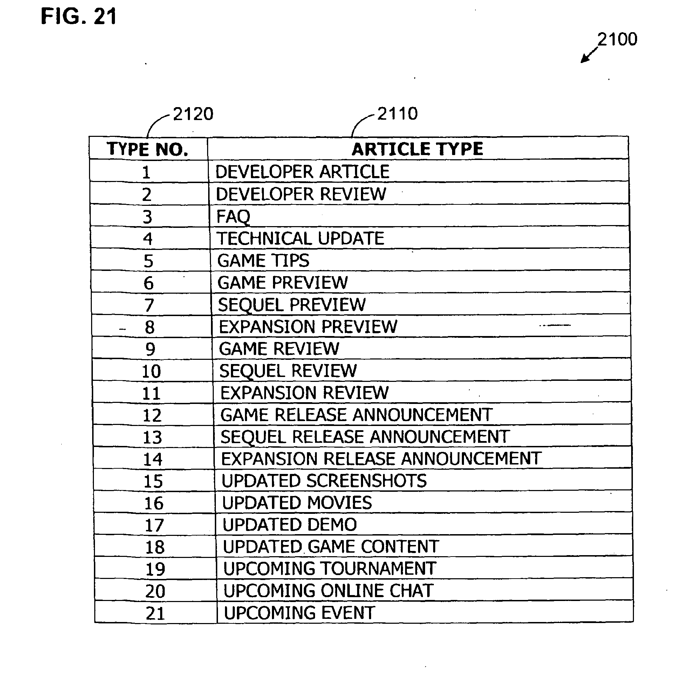

In an implementation focused on computer games, instead of using the message types shown in FIG. 8, messages types from the table 2100 of FIG. 21 can be used. As shown, the message types are tailored to the specifics of a computer game implementation. For example, links to an upcoming tournament can be provided. The actual text messages to be shown for the message types may differ from that shown (e.g., "Get in on the upcoming tournament!").

### Exemplary Implementations in Activity Centers

Any of the technologies described herein can be implemented in an application or game activity center.

### Alternatives

Having illustrated and described the principles of the illustrated embodiments, that the embodiments can be modified in arrangement and detail without departing from such principles. For example, the processes (e.g. 1600, 1700, 1800) are described above in the Order or are divided in a particular manner only for the sake of convenience of providing their description. For instance, authentication 1610, validation 1625, and verification of temporal relevance 1630 do not need to be performed in a particular order. Furthermore, URL probing 1720 can also be performed immediately prior to launching the web browser 1805 instead of prior to displaying the information link at 1735. Thus, various other combinations of the processes as described can be rearranged while still remaining faithful to the concepts described above.

In general, the user related functions such as those shown in FIGs. 16, 17, & 18 and performed by the Update engine 940, the temporal relevancy engine 950 and the URL probing engine 960 can be implemented as API (Application Program Interface) related functions to work with the operating System and other Services of the user's Computer. Alternatively, a dedicated application or applications already installed on the user's Computer could be programmed to implement the methods described above. The particular arrangement and division of the functions performed by the engines 940, 950, and 960 may be altered to suit particular needs or this functionality may all be combined within one Service module.

Also, the description of a data file and its corresponding data structure rules is provided with reference to XML. However, other programming or markup languages or other methods of describing data and data structures can be equally applicable.

In view of many possible embodiments, it will be recognized that the illustrated embodiments include only examples and should not be taken as a limitation on the scope of the invention. Rather, the invention is defined by the following claims. We therefore claim as the invention all such embodiments that come within the scope of these claims.

## Claims

1. A method, at a local computer (120 A, 120B, 930), for displaying one or more links to remote information for providing up to date information about an application to a targeted group of consumers, each of the consumers of the targeted group having an application description file (935) associated with the application, the method comprising:
accessing the application description file (935) to determine a remote location (1110) of link data (140A, 140b, 1000, 915) associated with the application;
loading (210, 1703) link data from the remote location over a network (130), wherein the link data is information for generating a link stored in a data structure comprising a type field (1020) and a link target field (1010), the type field including a message type code and the link target field including a link destination;
validating (1625) that the link data matches a set of link data structure rules;
determining (1640) whether the link data is current;
if the link data is current, storing (1655) the link data on local storage of the local computer;
generating (420) the link (1330A, 1330B, 1210A, 1210B) based on the link data, the link comprising a text message to be displayed based on the message type code, and the link destination; and
displaying (220, 1735) the link, wherein the link is operable to navigate to the link destination when activated.

2. The method of claim 1, wherein the content according to the message type code is determined by selecting, based on the message type code, one message out of a set of predetermined text messages.

3. The method of claim 2, wherein the text messages are limited to brief, one-line text messages.

4. The method of claim 1, wherein the displaying is performed responsive to receiving a request to view information about the application with which the remote location of the link data is associated.

5. The method of claim 4, wherein the link destination indicates a web page comprising information relating to the application.

6. The method of claim 4, wherein the application is associated with the location of the link data via the network location stored in the application description file (935).

7. The method of claim 6, further comprising:
acquiring the application description file from the remote location.

8. The method of claim 7, further comprising:
authenticating the application description file.

9. The method of claim 8, further comprising:
authenticating the link data.

10. The method of claim 9, wherein authenticating the link data comprises:
verifying that the link data and the application description file originate from a same source.

11. The method of claim 1, wherein the displaying is performed by an operating system shell when presenting a representation of an application with which a location of the link data is associated.

12. The method of claim 11, wherein the link is displayed as attributed to a publisher with which the application is associated.

13. The method of claim 12, wherein the publisher and the location of the link data are associated with the application via the application description file associated with the application.

14. The method of claim 12, wherein:
the application is not installed on the local computer; and
the application is specified in a watch list for the local computer.

15. The method of claim 1, wherein the link data further comprises an expiration date, the determining that the link is current comprising determining whether the expiration date is earlier than the current date.

16. The method of claim 1, wherein:
the link data is managed by a publisher of a computer game;
the computer game is associated with the link data at the local computer; and
the link is presented as part of an operating shell-based game activity center when presenting information about the game.

17. The method of claim 1, wherein the link data further comprises a modified date, and the step of determining whether the link data is current comprises determining whether the modified date is earlier than the current date by a user specified time period.

18. The method of claim 1, wherein the link data further comprises a link data modified date, and the step of determining whether the link data is current comprises comparing the link data modified date with a modified date of a corresponding link data currently approved for display.

19. The method of claim 1, wherein the set of link data structure rules is implemented as an XML schema file.

20. The method of claim 1, where the link destination is specified by a Uniform Resource Location, URL, the method further comprising prior to displaying the link, verifying (1720) that accessing the link destination specified by the URL does not yield an error page.

21. One or more computer-readable media comprising computer-executable instructions for performing the method of one of claims 1 to 20 to display, at a local computer (120 A, 120 B, 930), one or more links to remote information.

22. A graphical user interface comprising means adapted to perform the method of one of claims 1 to 20.

## Patentansprüche

1. Verfahren, mit dem an einem lokalen Computer (120 A, 120B, 930) eine oder mehrere Verknüpfungen zu entfernten Informationen angezeigt werden, um aktuelle Informationen über eine Anwendung für eine Zielgruppe von Verbrauchern anzuzeigen, wobei jeder der Verbraucher der Zielgruppe über eine Anwendungs-Beschreibungsdatei (935) verfügt, die mit der Anwendung zusammenhängt, und wobei das Verfahren umfasst:
Zugreifen auf die Anwendungs-Beschreibungsdatei (935), um eine entfernte Position (1110) von Verknüpfungsdaten (140A, 140B, 1000, 915) zu bestimmen, die mit der
Anwendung zusammenhängen;
Laden (210, 1703) von Verknüpfungsdaten von der entfernten Position über ein Netzwerk (130), wobei die Verknüpfungsdaten Informationen zum Erzeugen einer Verknüpfung sind, die in einer Datenstruktur gespeichert ist, die ein Typ-Feld (1020) und ein Verknüpfungsziel-Feld (1010) umfasst, und das Typ-Feld einen Nachrichtentyp-Code enthält und das Verknüpfungsziel-Feld ein Verknüpfungs-Bestimmungsziel enthält;
Bestätigen (1625), dass die Verknüpfungsdaten einem Satz von Verknüpfungsdaten-Strukturregeln entsprechen;
Feststellen (1640), ob die Verknüpfungsdaten aktuell sind;
wenn die Verknüpfungsdaten aktuell sind, Speichern (1655) der Verknüpfungsdaten in einem lokalen Speicher des lokalen Computers;
Erzeugen (420) der Verknüpfung (1330A, 1330B, 1210A, 1210B) auf Basis der Verknüpfungsdaten, wobei die Verknüpfung eine Textnachricht, die auf Basis des Nachrichtentyp-Codes anzuzeigen ist, und das Verknüpfungs-Bestimmungsziel umfasst; und
Anzeigen (220, 1735) der Verknüpfung, wobei die Verknüpfung in Funktion Navigation zu dem Verknüpfungs-Bestimmungsziel ermöglicht.

2. Verfahren nach Anspruch 1, wobei der Inhalt entsprechend dem Nachrichtentyp-Code festgestellt wird, indem auf Basis des Nachrichtentyp-Codes eine Nachricht aus einem Satz vorgegebener Textnachrichten ausgewählt wird.

3. Verfahren nach Anspruch 1, wobei die Textnachrichten auf kurze, einzeilige Textnachrichten beschränkt sind.

4. Verfahren nach Anspruch 1, wobei das Anzeigen in Reaktion auf Empfang einer Anforderung zum Betrachten von Informationen über die Anwendung durchgeführt wird, mit der die entfernte Position der Verknüpfungsdaten zusammenhängt.

5. Verfahren nach Anspruch 4, wobei das Verknüpfungsziel eine Webseite anzeigt, die Informationen umfasst, die sich auf die Anwendung beziehen.

6. Verfahren nach Anspruch 4, wobei die Anwendung mit der Position der Verknüpfungsdaten über die Netzwerk-Position zusammenhängt, die in der Anwendungsbeschreibungs-Datei (935) gespeichert ist.

7. Verfahren nach Anspruch 6, das des Weiteren umfasst:
Beziehen der Anwendungsbeschreibungs-Datei von der entfernten Position.

8. Verfahren nach Anspruch 7, das des Weiteren umfasst:
Authentifizieren der Anwendungsbeschreibungs-Datei.

9. Verfahren nach Anspruch 8, das des Weiteren umfasst:
Authentifizieren der Verknüpfungsdaten.

10. Verfahren nach Anspruch 9, wobei Authentifizieren der Verknüpfungsdaten umfasst:
Verifizieren, dass die Verknüpfungsdaten und die Anwendungsbeschreibungs-Datei von ein und derselben Quelle stammen.

11. Verfahren nach Anspruch 1, wobei das Anzeigen durch eine Betriebssystem-Shell durchgeführt wird, wenn eine Darstellung einer Anwendung präsentiert wird, mit der eine Position der Verknüpfungsdaten zusammenhängt.

12. Verfahren nach Anspruch 11, wobei die Verknüpfung als einem Herausgeber zugeschrieben angezeigt wird, mit dem die Anwendung zusammenhängt.

13. Verfahren nach Anspruch 12, wobei der Herausgeber und die Position der Verknüpfungsdaten mit der Anwendung über die Anwendungsbeschreibungs-Datei zusammenhängen, die mit der Anwendung zusammenhängt.

14. Verfahren nach Anspruch 12, wobei:
die Anwendung nicht auf dem lokalen Computer installiert ist; und
die Anwendung in einer Überwachungsliste für den lokalen Computer angegeben ist.

15. Verfahren nach Anspruch 1, wobei die Verknüpfungsdaten des Weiteren ein Ablaufdatum umfasst und das Feststellen, dass die Verknüpfung aktuell ist, umfasst, dass festgestellt wird, ob das Ablaufdatum vor dem aktuellen Datum liegt.

16. Verfahren nach Anspruch 1, wobei:
die Verknüpfungsdaten von einem Herausgeber eines Computerspiels verwaltet werden;
das Computerspiel mit den Verknüpfungsdaten an dem lokalen Computer zusammenhängt; und
die Verknüpfung als Teil eines auf der Betriebssystem-Shell basierenden Spielaktivitätszentrum präsentiert wird, wenn Informationen über das Spiel präsentiert werden.

17. Verfahren nach Anspruch 1, wobei die Verknüpfungsdaten des Weiteren ein modifiziertes Datum umfassen und der Schritt, in dem festgestellt wird, ob die Verknüpfungsdaten aktuell sind, umfasst, dass festgestellt wird, ob das modifizierte Datum um einen vom Benutzer angegebenen Zeitraum vor dem aktuellen Datum liegt.

18. Verfahren nach Anspruch 1, wobei die Verknüpfungsdaten des Weiteren ein modifiziertes Datum der Verknüpfungsdaten umfassen und der Schritt, mit dem festgestellt wird, ob die Verknüpfungsdaten aktuell sind, umfasst, dass das modifizierte Datum der Verknüpfungsdaten mit einem modifizierten Datum eines entsprechenden Verknüpfungsdatenelementes verglichen wird, das aktuell zur Anzeige zugelassen ist.

19. Verfahren nach Anspruch 1, wobei der Satz von Verknüpfungsdaten-Strukturregeln als eine XML-Schema-Datei implementiert ist.

20. Verfahren nach Anspruch 1, wobei das Verknüpfungs-Bestimmungsziel durch eine URL (Uniform Resource Location) spezifiziert wird und das Verfahren des Weiteren umfasst, dass vor dem Anzeigen der Verknüpfung verifiziert wird (1720), dass Zugreifen auf das Verknüpfungs-Bestimmungsziel, das durch die URL spezifiziert wird, nicht zu einer Fehler-Seite (error page) führt.

21. Ein oder mehrere computerlesbare Medium/Medien, das/die durch Computer ausführbare Befehle umfasst/umfassen, durch die das Verfahren nach einem der Ansprüche 1 bis 20 durchgeführt wird, um an einem lokalen Computer (120 A, 120 B, 930) eine oder mehrere Verknüpfung/en zu entfernten Informationen anzuzeigen.

22. Grafische Benutzerschnittstelle, die Mittel zum Durchführen des Verfahrens nach einem der Ansprüche 1 bis 20 umfasst.

## Revendications

1. Procédé, opérant sur un ordinateur local (120 A, 120 B, 930), destiné à afficher un ou plusieurs liens vers des informations distantes pour acheminer des informations actualisées concernant une application vers un groupe de consommateurs ciblés, chacun des consommateurs du groupe ciblé possédant un fichier de description d'application (935) associé à l'application, le procédé comportant :
l'accès au fichier de description d'application (935) pour déterminer un emplacement distant (1110) de données de lien (140A, 140B, 1000, 915) associées à l'application ;
le chargement (210, 1703) des données de lien provenant de l'emplacement distant sur un réseau (130), dans lequel les données de lien sont des informations destinées à générer un lien stocké dans une structure de données, comportant un champ de type (1020) et un champ de cible de lien (1010), le champ de type contenant un code de type de message et le champ de cible de lien contenant une destination de lien ;
la validation (1625) du fait que les données de lien correspondent à un ensemble de règles de structure de données de lien ;
la détermination (1640) de savoir si les données de lien sont à jour ;
si les données de lien sont à jour, stocker (1655) les données de lien sur un dispositif de stockage local de l'ordinateur local ;
la génération (420) du lien (1330A, 1330B, 1210A, 1210B) en fonction des données de lien, le lien comportant un message de texte qui doit être affiché en fonction du code de type de message et de la destination du lien ; et
l'affichage (220, 1735) du lien, le lien étant utilisable, lorsqu'il est activé, pour naviguer vers la destination du lien.

2. Procédé selon la revendication 1 dans lequel le contenu conforme au code de type de message est déterminé en sélectionnant, en fonction du code de type de message, un message dans un ensemble de messages de texte prédéterminés.

3. Procédé selon la revendication 2, dans lequel les messages de texte sont limités à des messages succincts constitués d'un texte tenant sur une ligne.

4. Procédé selon la revendication 1, dans lequel l'affichage est mis en oeuvre par une réponse à la réception d'une demande de visualisation d'informations concernant l'application avec laquelle est associé l'emplacement distant des données de lien.

5. Procédé selon la revendication 4, dans lequel la destination du lien indique une page Web comportant des informations relatives à l'application.

6. Procédé selon la revendication 4, dans lequel l'application est associée à l'emplacement des données de lien via l'emplacement de réseau stocké dans le fichier de description d'application (935).

7. Procédé selon la revendication 6, comportant en outre l'étape consistant à :
acquérir le fichier de description d'application en provenance de l'emplacement distant.

8. Procédé selon la revendication 7, comportant en outre :
l'authentification du fichier de description d'application.

9. Procédé selon la revendication 8, comportant en outre :
l'authentification des données de lien.

10. Procédé selon la revendication 9, dans lequel l'authentification des données de lien comporte :
la vérification que les données de lien et le fichier de description d'application ont pour origine une même source.

11. Procédé selon la revendication 1, dans lequel la visualisation est mise en oeuvre au moyen d'un interpréteur de commandes de système d'exploitation (shell) lors de la présentation d'une représentation d'une application avec laquelle est associé un emplacement des données de lien.

12. Procédé selon la revendication 11, dans lequel le lien est affiché en indiquant une attribution à un éditeur avec lequel est associée l'application.

13. Procédé selon la revendication 12, dans lequel l'éditeur et l'emplacement des données de lien sont associés à l'application via le fichier de description d'application associé à l'application.

14. Procédé sans la revendication 12, dans lequel :
l'application n'est pas installée sur l'ordinateur local ; et
l'application est définie dans une liste de suivi de l'ordinateur local.

15. Procédé selon la revendication 1, dans lequel les données de lien comportent en outre une date d'expiration, et dans lequel la détermination de savoir si le lien est à jour comporte la détermination de savoir si la date d'expiration est antérieure à la date présente.

16. Procédé selon la revendication 1, dans lequel :
les données de lien sont gérées par un éditeur d'un jeu informatique ;
le jeu informatique est associé aux données de lien sur l'ordinateur local ; et
le lien est présenté comme partie intégrante d'un centre d'activités de jeu basé sur un interpréteur de commandes d'exploitation lors de la présentation d'informations concernant le jeu.

17. Procédé selon la revendication 1, dans lequel les données de lien comportent en outre une date modifiée et la détermination de savoir si les données de lien sont à jour comporte la détermination de savoir si la date modifiée est antérieure à la date présente d'une durée définie par un utilisateur.

18. Procédé selon la revendication 1, dans lequel les données de lien comportent en outre une date modifiée de données de lien, et la détermination de savoir si les données de lien sont à jour comporte la comparaison de la date modifiée de données de lien avec une date modifiée de données de lien correspondantes dont l'affichage a été approuvé.

19. Procédé selon la revendication 1, dans lequel l'ensemble de règles de structure de données de lien est mis en oeuvre sous la forme d'un fichier de schéma XML.

20. Procédé selon la revendication 1, dans lequel la destination de lien est spécifiée par une adresse URL (Uniform Resource Locator), le procédé comprenant en outre, préalablement à l'affichage du lien, la vérification (1720) que l'accès à la destination du lien spécifié par l'adresse URL ne conduit pas à une page d'indication d'erreur.

21. Un ou plusieurs supports lisibles par ordinateur comportant des instructions exécutables par ordinateur pour mettre en oeuvre le procédé selon l'une quelconque des revendications 1 à 20, destiné à afficher, sur un ordinateur local (120 A, 120 B, 930), un ou plusieurs liens vers des informations distantes.

22. Interface utilisateur graphique comportant des moyens adaptés pour mettre en oeuvre le procédé selon l'une quelconque des revendications 1 à 20.
